Europäisches Patentamt

European Patent Office

Office européen des brevets

(19)

(11) **EP 0 586 139 B1**

(12) **EUROPEAN PATENT SPECIFICATION**

(45) Date of publication and mention
of the grant of the patent:
**27.05.1998 Bulletin 1998/22**

(51) Int Cl.⁶: **H04N 1/46**

(21) Application number: **93306507.0**

(22) Date of filing: **18.08.1993**

(54) **Printing apparatus and method for more than five colours**

Gerät und Verfahren zum Drucken mit mehr als fünf Farben

Appareil et procédé d'impression à plus de cinq couleurs

(84) Designated Contracting States:
**AT BE CH DE ES FR GB IT LI NL**

(30) Priority: **30.08.1992 IS 102994**

(43) Date of publication of application:
**09.03.1994 Bulletin 1994/10**

(73) Proprietor: **SCITEX CORPORATION LTD.**
**Herzliya 46103 (IL)**

(72) Inventor: **Litvak, Matty**
**Givat Savion, Ganei Tikva 55900 (IL)**

(74) Representative: **Hillier, Peter et al**
**Reginald W. Barker & Co.,**
**Chancery House,**
**53-64, Chancery Lane**
**London, WC2A 1QU (GB)**

(56) References cited:
EP-A- 0 184 289          WO-A-82/00902
DE-A- 2 853 509          FR-A- 2 455 307
GB-A- 1 228 878

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### FIELD OF THE INVENTION

The present invention relates to more than four color printing systems generally.

### BACKGROUND OF THE INVENTION

Conventional color printing presses typically print output prints with four or fewer inks, where the inks are typically cyan, magenta, yellow and black (CMYK). For each ink color, a color separation film is produced, marking the locations where the specific ink is to be placed.

The press places ink on the output print four times, one for each color, in accordance with the corresponding color separation films. The resultant colors are combinations of the colors of the printed inks.

Color separation and color printing are described in detail in the publication:

Electronic Color Separation, by R.K. Molla, published by Chapman Printing Company, Parkersburg, W. Virginia, U.S.A., 1988.

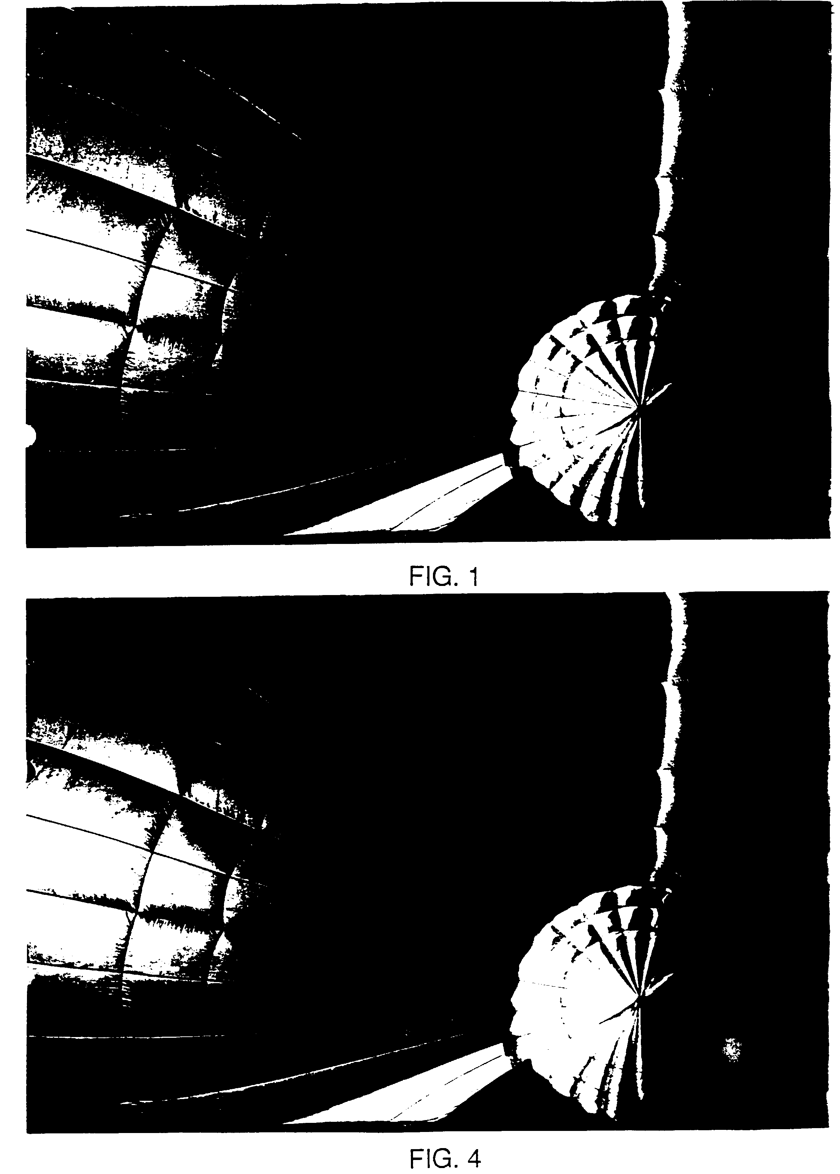

A sample picture printed with four different inks is provided in Fig. 1.

The visible color space is a three-dimensional space for which a plurality of standard and non-standard coordinate systems have been defined. One standard coordinate systems includes a luminance coordinate, Y, and two chromaticity coordinates x and y.

When it is desired to print a color outside the gamut of the printing press, it is known in the art to overprint an additional ink, typically of the desired color, in certain areas of the image. For example, if a photograph of an automobile is being reproduced and the color of the automobile is a specific red not within the gamut of the printing press, a special ink, of the desired red, is selected and an additional color separation film is produced to indicate where the extra ink is to be placed in additional to the regular printing inks.

The process of utilizing an extra color separation is known in the art as "touch-plate" printing and is common for high quality printing.

An article by Harald Kuppers, entitled "Printing by Septichromy", appeared as an extract of a conference given by Kuppers at a Colorix Seminary in Paris. The Kuppers article suggests that, to increase the gamut of a printing press, two colors, plus a black color, may be selected from among seven specific colors including a black color.

### SUMMARY OF THE INVENTION

It is an object of the present invention to provide a system and method for printing in more than four colors.

The invention provides a method for producing a large gamut output print of a color image from at least five different color separations comprising:

providing an input digital representation of a color image in an input color space being a three color space;

converting said input digital representation into an output digital representation of the color image comprising an output digital representation in said three colour space and an output digital representation in a four colour space;

producing at least five different colour separations to be used for printing said color image from said output digital representations, said at least five color separations comprising four colour separations produced from said output digital representation in said four colour space substantially without modification and at least one additional color separation produced from said output digital representation in said three color space; and

causing said at least one additional color separation to have a color density which depends on color densities of said four color separations.

Further in accordance with a preferred embodiment of the present invention, the method also includes the step of unsharp masking the input digital representation before the step of converting.

Still further in accordance with a preferred embodiment of the present invention, the at least five color output space includes a no more than seven color output space.

Additionally in accordance with a preferred embodiment of the present invention, the step of unsharp masking is performed twice, creating first and second separately sharpened input representations, and wherein the step of converting includes the step of converting the first and second input representations to first and second output representations, defined in approximately complementary color spaces, wherein the first and second output representations together form the output digital representations in the at least five-color output space. Further in accordance with a preferred embodiment of the present invention, the step of unsharp masking is performed with two different sets of parameters.

Still further in accordance with a preferred embodiment of the present invention, the second input representation differs in sharpness, relative to the first input representation.

Further in accordance with a preferred embodiment of the present invention, the 5 colors includes at least one of a red-like color, a green-like color or a blue-like color.

Still further in accordance with a preferred embodiment of the present invention, the 5 colors includes at least one of the following colors; orange, green and violet.

Additionally in accordance with a preferred embodiment of the present invention, the input digital representation represents an input medium.

Further in accordance with a preferred embodiment of the present invention, the method also includes the step of displaying the output digital representation on a monitor.

Still further in accordance with a preferred embodiment of the present invention, the step of converting is performed by a LookUp Table (LUT).

Additionally in accordance with a preferred embodiment of the present invention, the method also includes the step of printing the color image from the output digital representation in cyan-like, magenta-like, yellow-like, black-like colors and in at least one of the following group of colors: red-like, green-like and blue-like.

Further in accordance with a preferred embodiment of the present invention, the method includes the steps of prescanning an input medium to provide the input digital representation, modifying the LUT in accordance with user input, rescanning the input medium to produce a new input digital representation and converting the new input digital representation with the modified LUT.

Additionally in accordance with a preferred embodiment of the present invention, the method includes the step of performing color correction after the step of generating.

The invention also provides an apparatus for producing a large gamut output print of a color image from at least five different color separations comprising:

a memory storing an input digital representation of a color image in a three color input space; and

a converter for converting said input digital representation into an output digital representation of the color image in said three color space and an output image in a four color space;

a plotter for producing at least five different color separations to be used for printing said color image from said output digital representations;

said at least five color separations comprising four color separations produced from said output digital representation in said four color space substantially without modification and at least one additional color separation produced from said output digital representation in said three color space; and

said at least one additional color separation has a dot density which depends on color densities of said four color separations.

Further in accordance with a preferred embodiment of the present invention, the apparatus includes an unsharp mask filter, providing input to the converter, for sharpening the input digital representation.

Still further in accordance with a preferred embodiment of the present invention, the at least five color space includes a no more than seven color output space.

Still further in accordance with a preferred embodiment of the present invention, the unsharp mask filter is operative to create first and second separately sharpened input representations and wherein the converter includes means for converting the first and second input representations to first and second output representations, defined in approximately complementary color spaces, wherein the first and second output representations together form the output digital representation in the at least five-color output space.

Further in accordance with a preferred embodiment of the present invention, the unsharp mask filters operate with two different sets of parameters.

Still further in accordance with a preferred embodiment of the present invention, the second input representation is more sharply masked than the first input representation.

Further in accordance with a preferred embodiment of the present invention, the 5 colors includes at least one of a red-like color, a green-like color or a blue-like color.

Still further in accordance with a preferred embodiment of the present invention, the 5 colors includes at least one of the following colors: orange, green and violet.

Further in accordance with a preferred embodiment of the present invention, the step of printing includes the step of preparing half-tone separations having screen angles wherein the screen angles for the cyan-like, magenta-like, yellow-like and black-like half-tone separations includes first, second, third and fourth screen angles, repspectively, and the screen angles for the red-like, green-like and blue-like half-tone separations include mutually dinstinct ones from among the first, second, third and fourth screen angles.

Still further in accordance with a preferred embodiment of the present invention, the input digital representation represents an input medium.

Further in accordance with a preferred embodiment of the present invention, the apparatus also includes a monitor and a conversion-to-monitor color space unit for converting the output digital representation for display on the monitor.

Still further in accordance with a preferred embodiment of the present invention, the converter includes a LookUp Table (LUT).

Additionally in accordance with a preferred embodiment of the present invention, the apparatus also includes an output device operative to print the color image from the output digital representation in cyan-like, magenta-like, yellow-like, black-like colors and in at least one of the following group of colors; red-like, green-like and blue-like.

Further in accordance with a preferred embodiment of the present invention, the apparatus includes a scanner for prescanning an input medium to provide the input digital representation and an image and LUT manipulator for modifying the LUT in accordance with user input, wherein the scanner also is operative to rescan the input medium to produce a new input digital representation and the converter is operative to convert the new input digital representation with the modified LUT.

Still further in accordance with a preferred embodiment of the present invention, the output device includes means for preparing half-tone separations having screen angles wherein the screen angles for the cyan-like, magenta-like, yellow-like and black-like half-tone separations include first, second, third and fourth screen angles, respectively, and the screen angles for the red-like, green-like and blue-like half-tone separations include mutually distinct ones from among the first, second, third and fourth screen angles.

Further in accordance with a preferred embodiment of the present invention, the no more than seven color output space includes a five, six or seven color output space.

The term "rescanning" in the present specification typically refers to modification of an existing digital representation of a color image rather than to physically rescanning a color image from a physical substrate to obtain a new digital representation of the color image.

**BRIEF DESCRIPTION OF THE DRAWINGS**

The present invention will be understood and appreciated more fully from the following detailed description taken in conjunction with the drawings and appendices in which:

Fig. 1 is a color illustration of a color image generated using prior art four-color printing techniques;

Fig. 2 is a diagram of a printable color space, constructed and operative in accordance with the present invention, which uses more than four printing inks, more than three of which are printed at individual locations;

Fig. 3 is a block diagram illustration of a system, constructed and operative in accordance with the present invention, for producing output prints using more than four colors;

Fig. 4 is a color illustration of the color image of Fig. 1, generated using the more-than-four-color printing technique of the present invention;

Fig. 5 is a block diagram illustration of a system for generating a converter useful in the system of Fig. 4;

Fig. 6 is a hue-saturation diagram;

Figs. 7A and 7B are diagrams of transformations useful in implementing the system of Fig. 5;

Fig. 8 is a block diagram of a system which is a modification of the system of Fig. 3;

Fig. 9A is a color illustration of a four-color subimage, generated using the apparatus of Fig. 8, which represents the color image of Figs. 1 and 5 when taken together with the subimage of Fig. 9B;

Fig. 9B is a color illustration of a three-color subimage, generated using the apparatus of Fig. 8, which represents the color image of Figs. 1 and 5 when taken together with the subimage of Fig. 9A; and

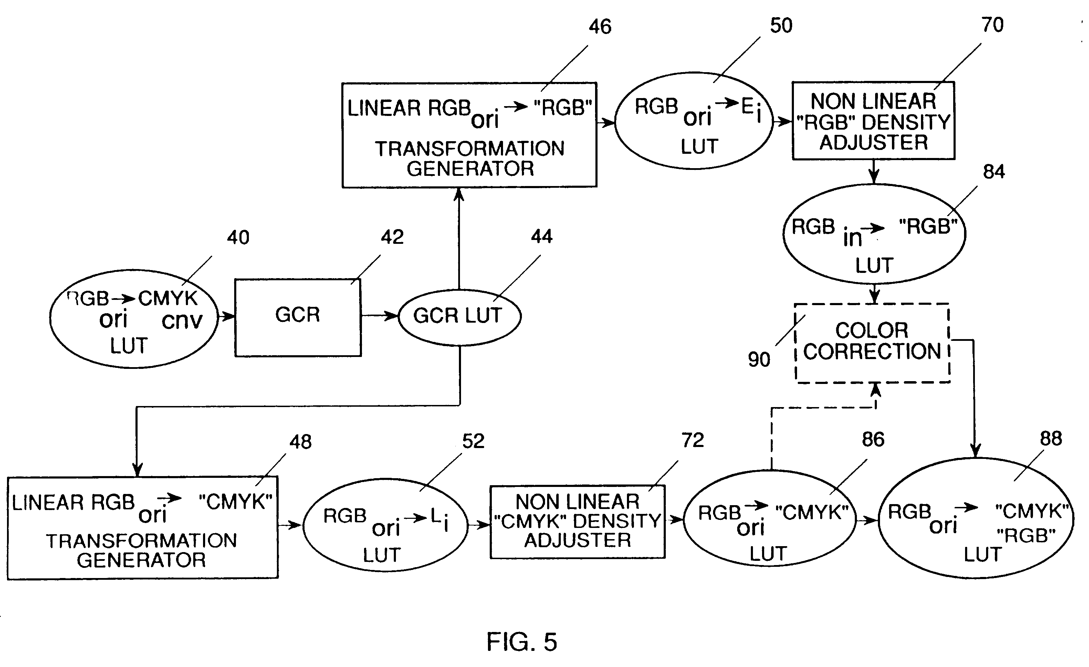

Appendix A is a computer listing of a best mode method for receiving a LUT such as LUT 40 of Fig. 5 and constructing LUTs 84 and 86 of Fig. 5.

**DETAILED DESCRIPTION OF PRESENT INVENTION**

Fig. 1 is a prior art figure which is described in the above Background section of the specification.

The present invention is operative to provide a representation of a color image in a color space based on at least five colors. In accordance with a preferred embodiment of the present invention, the at least five color color space is based on:

a. Four colors, termed herein "CMYK-like" colors or "CMYK" colors or "basic" colors, which typically include three colors which approximately span the printing color space and which typically although not necessarily resemble cyan, magenta and yellow, respectively; and a fourth black-like color; and

b. One, two or three additional colors, termed herein "RGB"-like or "RGB" or "extra" colors, comprising one, two or three colors from among a set of three colors which approximately span the printing color space and which typically approximately complement the CMY-like "basic" colors. The three extra colors are typically respectively redlike, bluelike and greenlike in appearance. The terms "redlike", "bluelike" and "greenlike" are intended here to be interpreted broadly and to include, for example, orange, green and violet (OGV colors), respectively.

Sample CMYK inks are the conventional toners manufactured by Dupont deNemours GmbH of Neu-Issenberg, Germany. Sample RGB inks are also manufactured by Dupont deNemours GmbH of the following toners: red formed of 90% RRT and 10% OF1, green formed of 45% GGT4, 50% GF1 and 5% YY6, and blue formed of 70% BBT5, 15% MF1 and 15% TW6.

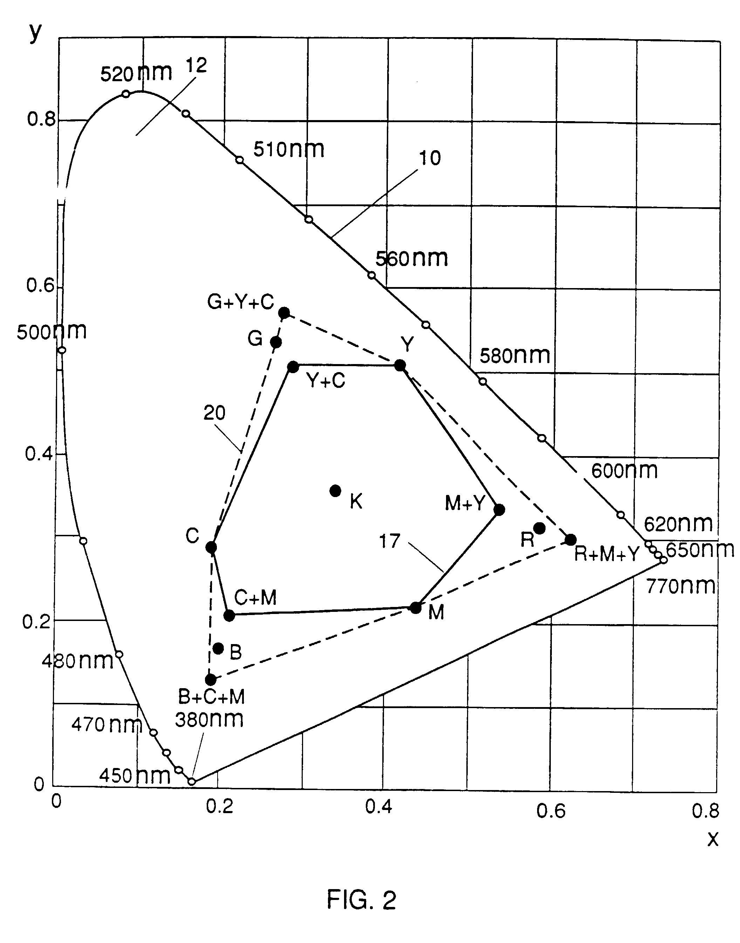

Fig. 2 is a diagram of a printable color space, constructed and operative in accordance with the present invention, which uses more than four printing inks, more than three of which are printed at individual locations.

Specifically, Fig. 2 illustrates a two-dimensional plot of x and y color coordinates, at the origin of the Y axis. The entire visible spectrum, having wavelengths varying from 380 nm - 770 nanometers, is indicated by a curve 10 having an interior 12. The luminance quality, or the effect of black on the space 12, corresponds to an axis which perpendicularly intersects the plot of Fig. 2.

The visible color space 12 is not printable in its entirety when the four CMYK colors are employed. In Fig. 2, an approximate gamut of a printing press which utilizes the more-than-four-color scheme of the present invention is indicated by a surrounding dotted line 20. The approximate gamut of a printing press which utilizes a conventional four-color scheme is indicated by a surrounding solid line 17. Gamuts 17 and 20 of Fig. 2 are only approximations of the actual gamuts since the gamut of a press, in actual practice, is affected by idiosynchratic factors such as printing stock and printing method.

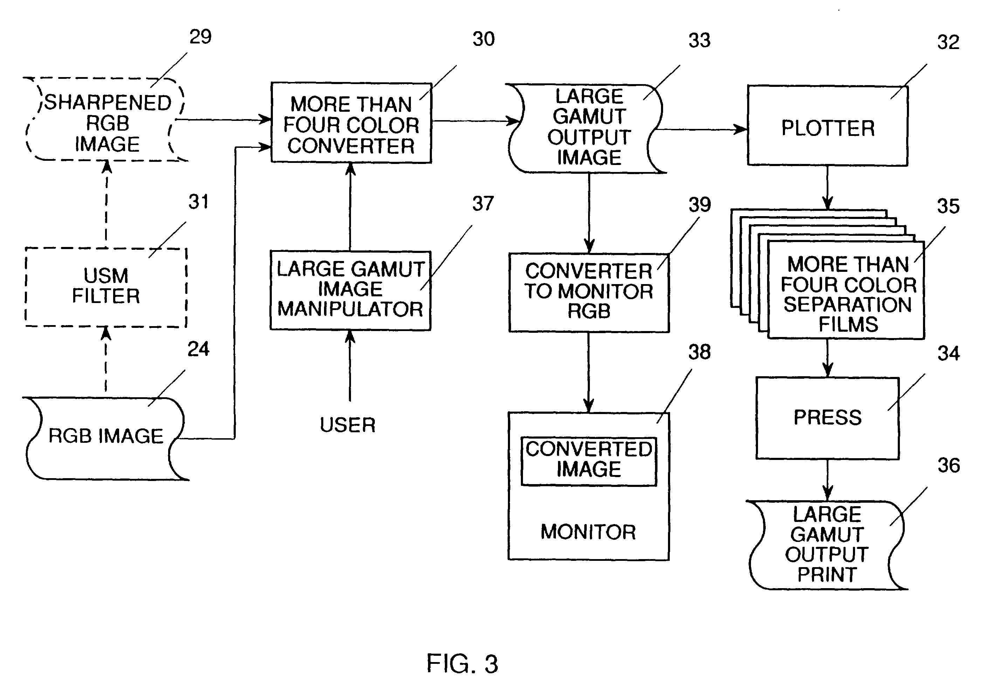

Reference is now made to Fig. 3 which is a block diagram illustration of a system, constructed and operative in accordance with the present invention, for producing output prints using more than four colors. The input image to the system of Fig. 3 typically has 3 color components and is also termed herein the original RGB image or the RGB$_{ori}$ image, although it need not necessarily be represented in RGB. The input image may, for example, take the form cf a memory storing a digital representation 24 provided by pre-scanning a hard copy, using a electronic color separation scanner such as Scitex's Smart Scanner or may, for example, be an input representation of an image in a 3-component input color space, arriving from a storage medium.

The memory may comprise any suitable device from which a digital image may be retrieved, such as but not limited to a computer disk, a magnetic tape, an magneto-optical disk, an optical disk such as a compact disk, either local or, alternatively, remotely disposed and connected to the remaining components of the apparatus, as via a network. The memory may be accessed either directly or via a RAM.

A particular feature of the system of Fig. 3 is that a converter-to-more-than-four-coordinates 30 is provided which receives an input digital representation of an image in a three component color coordinate system, such as RGB, and provides an output digital representation in an at least five coordinate, color coordinate system. The input and output digital representations each comprise a multiplicity of pixels, wherein a pixel has corresponding color density values.

For each pixel of the input digital representation 24, which may, for example, comprise an RGB image, the converter 30 directly converts the input digital values to a large gamut output image 33 including a multiplicity of output digital values including both basic and extra color components. Converter 30 may be implemented as a LookUp Table (LUT) comprising a plurality of cells each including an address and a contents. The LUT is preferably stored on a suitable hardware memory element such as the image processor board of the Scitex Smart Scanner, as described in more detail hereinbelow. Typically, the LUT does not process neighboring pixels to determine the output digital values of a current pixel, except in that interpolation may be required to determine the output digital values of the current pixel. Alternatively, converter 30 may be implemented as a computation unit in a CPU.

Apparatus for generating a converter 30 is described herein in detail with reference to Fig. 5.

Optionally, before conversion by converter 30, the input digital representation 24 may be processed by an unsharp mask filter 31 which is operative to sharpen the details of the input image 24, thereby to provide a sharpened image 29. Conventional unsharp masking is described in detail in chapter 15 of the above-referenced publication by Molla.

The output digital representation 33 is provided to a plotter or imagesetter 32, such as the Dolev plotter, commercially available from Scitex Corporation Ltd. of Herzlia, Israel. The plotter 32 prepares, from the output digital representation, at least five half-tone color separations (not shown), one for each one of the inks to be printed. The plotter 32 then plots the separations, producing thereby a set 35 of at least five color separation films.

Alternatively, plotter 32 may be replaced by a proofer, such as one of the proofers manufactured by Iris Graphics, Inc. of Bedford, Ma., U.S.A.

The following is a sample set of screen angles that has been found effective for more than four color printing:

# EP 0 586 139 B1

| Cyan and Red | 112.5° |
|---|---|
| Magenta and Green | -7.5° |
| Yellow | 97.5° |
| Black and Blue | 52.5° |

The color separation films 35 are provided to a printing press 34 which prints a large gamut output print 36 therefrom. A sample output print 36, illustrating the same color image illustrated in Fig. 1 but in more than four colors, resulting in a sharper, better defined image, is illustrated in Fig. 4.

The apparatus of Fig. 3 optionally comprises a large gamut image manipulator 37 which performs conventional color corrections on the LUTs of four color converter 30 and/or on the large gamut output image 33. The color correction functionalities of manipulator 37 may be similar to those of color correction unit 90 of Fig. 5 which is described in detail below.

The image manipulation device 37 is also preferably operative to perform cropping, rotation, using specialized filters, and other image manipulations operations which are known in the art in response to commands from a user. For color correction operations, gradations, grey component replacement (GCR), under color removal and addition (UCR and UCA), the image manipulation device 37 modifies the converter 30.

Due to the direct correspondence between the input and output representations, the image manipulation device 37 can perform the full range of color manipulations and, in some cases, can increase the gamut of the output print. This is in contrast to certain state of the art systems which manipulate an input image provided in an ink-based output color space.

When the user has finished manipulating the converter 30, the input image is reconverted, using the converter 30 after manipulation by manipulator 37, and a final large gamut digital representation 33 is produced. For example, if the input image is provided by a scanning device, the input medium is typically rescanned and the output of the scanning device is converted utilizing the converter 30 after manipulation by manipulator 37.

Alternatively, the input image may be manipulated directly by the manipulator 37, rather than being converted by the converter 30 which has been manipulated by manipulator 37.

The apparatus of Fig. 3 also preferably comprises a monitor 38 for on-line display of a representation of the large gamut output image 36. A converter-to-monitor-RGB 39 is operative to convert the more-than-four color representation of image 36 into the coordinates of the monitor. The converter-to-monitor-RGB unit 39 may, for example, be implemented on the VIP2 board of a Scitex Whisper workstation.

Fig. 5 is a block diagram illustration of a system for generating a LUT 88 which is suitable for implementing converter 30 of Fig. 3.

The apparatus of Fig. 5 includes a conventional lookup table 40 which is operative to convert input RGB values, labeled $RGB_{ori}$, to conventional four color output, such as but not limited to conventional CMYK output, as indicated by the label $CMYK_{cnv}$. The $CMYK_{cnv}$ output of LUT 40 is received by an optional grey color replacer (GCR) 42 which is operative to modify the output values of each cell in LUT 40 such that black color is used to provide grey values. Conventional GCR techniques are described in detail in Chapter 14 of the above-referenced publication by Molla.

The output of GCR 42, comprising $CMYK(GCR)_{cnv}$ output, may be provided to units 46 and 48, both of which are described in more detail below. Preferably, however, a single GCR LUT 44 is constructed which has the functionalities of LUT 40 and GCR unit 42 combined and which therefore replaces LUT 40 and GCR unit 42. According to this embodiment, units 46 and 48 receive $CMYK(GCR)_{cnv}$ output from GCR LUT 44.

Alternatively, the GCR elements may be omitted and units 46 and 48 may receive $CMYK_{cnv}$ output directly from LUT 40.

Units 46 and 70 employ the $CMYK(GCR)_{cnv}$ output or the $CMYK_{cnv}$ output, both of which are referred to generally below as $CMYK_{cnv}$ output, to generate, in a two stage procedure, a LUT 84 which receives an input digital image in $RGB_{ori}$ and creates a digital image in the "RGB" color coordinate system. In the first stage, the $RGB_{ori}$ values are linearly transformed by linear transformation generator 46 to obtain a preliminary "RGB" representation, also termed herein the $E_i$ representation. In the second stage, the preliminary "RGB" or $E_i$ representation is adjusted by nonlinear "RGB" color density adjuster 70 for nonlinearities. The output of the second stage is a nonlinear transformation from $RGB_{ori}$ directly to the final "RGB" representation, which nonlinear transformation is stored in LUT 84.

Units 48 and 72 employ the $CMYK(GCR)_{cnv}$ output or the $CMYK_{cnv}$ output, both of which are referred to generally below as $CMYK_{cnv}$ output, to generate, in a two stage procedure, a LUT 86 which receives an input digital image in $RGB_{ori}$ and creates a digital image in the "CMYK" color coordinate system. In the first stage, the $RGB_{ori}$ values are linearly transformed by linear transformation generator 48 to obtain a preliminary "CMYK" representation, also termed herein the $L_i$ representation. In the second stage, the preliminary "CMYK" or $L_i$ representation is adjusted by nonlinear "CMYK" color density adjuster 72 for nonlinearities. The output of the second stage is a nonlinear transformation from

RGB$_{ori}$ directly to the final "CMYK" representation, which nonlinear transformation is stored in LUT 86.

For example, E$_i$ values may be generated as follows:

$$E_i = \sum_j \alpha_{ij}(CMYK_{cnv})_j$$

where:

j = 1, 2, 3, 4;
i = 1, 2, 3;
(CMYK$_{cnv}$)$_j$ = the j'th component of a set of conventional or GCR-conventional C, M, Y and K components; and
the alpha values all satisfy -1.0 <= a$_{ij}$ <= 1.0 and may, for example, have the following values:

$$\alpha_{ij} = \begin{vmatrix} -0.45 & 0.55 & 0.53 & 0.0 \\ 0.60 & -0.40 & 0.60 & 0.0 \\ 0.45 & 0.45 & -0.60 & -0.2 \end{vmatrix}$$

For example, L$_i$ values may be generated as follows:

$$L_i = \sum_j \beta_{ij}(CMYK_{cnv})_j$$

where

j = 1, 2, 3, 4;
i = 1, 2, 3, 4;
(CMYK$_{cnv}$)$_j$ = the j'th component of a set of conventional or GCR-conventional C, M, Y and K components; and
the beta values satisfy -1.0 <= $\beta_{ij}$ <= 1.0. Sample values for the $\beta_{ij}$ are:

$$\beta_{ij} = 0.9 \text{ for } i = j$$

$$= 0.0 \text{ otherwise}$$

More generally, generator 46 determines, for each cell in GCR LUT 44, the extent of the extra colors needed, over and above the basic colors.

Generator 46 is only operative to determine the amount of extra "RGB" color needed. Generator 48 is operative to adjust, or typically to reduce, the amount of "CMYK" color needed in response to the addition of the extra "RGB" color.

Generator 48 determines, for each cell in LUT 44, a suitable amount of each basic color from among the basic "CMYK" colors, given the amount of extra ink to be employed.

Units 46 and 48 generate transformations, represented in Fig. 5 as LUTs 50 and 52 respectively although in practice it is not necessary to represent these transformations as LUTs. LUT 50 transforms RGB$_{ori}$ values into E$_i$ values. LUT 52 transforms RGB$_{ori}$ values into L$_i$ values.

The output of LUTs 50 and 52, E$_i$ and L$_i$ respectively, are provided to nonlinear color density adjusters 70 and 72, respectively, which generate adjusted extra color values, termed herein "RGB" values, and adjusted basic color values, termed herein "CMYK" values, respectively.

Despite the compensation of inks provided by generators 46 and 48, LUTs 50 and 52 produce output representations requiring too much ink, per pixel, to be used in the output print 36. Therefore, LUTs 50 and 52 are provided to respective nonlinear color density adjusters 70 and 72 which nonlinearly adjust the color density levels in the output representations generated by LUTs 50 and 52 respectively.

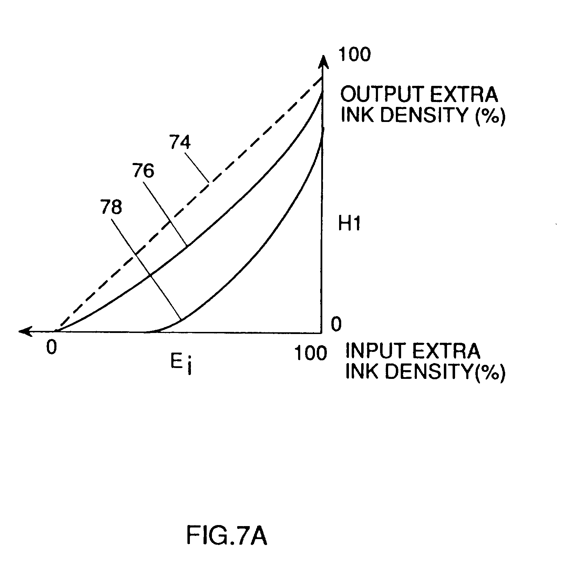

Nonlinear color density adjuster 70 replaces the extra color density values with adjusted values, in accordance with the curve shown in Fig. 7A. The curve of Fig. 7A graphs input color density with output color density, for the extra colors. If the color density adjuster did not operate, the dotted curve 74 would be operative. Typically, the extra colors are useful only at their higher densities. At their lower densities, the combination of the basic colors provides acceptable colors. Thus, the curves of Fig. 7A tend to be far from curve 74 at the low densities and close to it at the high densities.

Ink density adjuster 70 may perform any type of nonlinear operation; for example, it might operate in accordance with an exponential curve 76, or over only a small range, as shown by curve 78. Any form of curve which is below curve 74 is suitable, as long as the minimum and maximum values of color density are not affected.

Density adjuster 70 may, for example, perform the following computation in order to generate "RGB" components from $E_i$ components:

$$\text{"RGB"}_{ij} = D_i[(E_j - t_i)/(100 - t_i)]^{s(i)}, \quad E_j > t_i$$
$$= q_i E_j \quad\quad\quad\quad\quad\quad\quad\quad\quad E_j \le t_i$$

where:

$i = 1, 2, 3$;
$j = t_i, t_i + 1, ..., D_i. (D_i' >= T_i')$.
$D_i$ and $t_i$ are predetermined integer color percentages, such as 100 and 30 percent, respectively, for all i; and
$s(i)$ and $q_i$ are real numbers, such as 1.01 and 1.0, respectively, for all i.

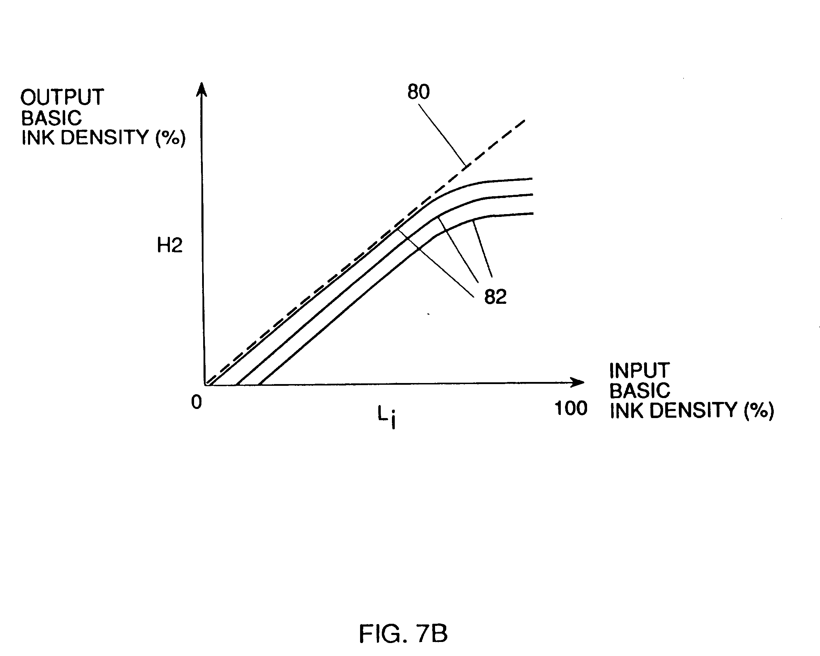

Ink density adjuster 72 performs any type of adjustment operation. Three sample adjustment curves 82 are provided in Fig. 7B. The curve of Fig. 7B graphs input color density with output color density, for the basic colors. If the color density adjuster did not operate, the dotted curve 80 would be operative. Typically, the basic colors are most useful at their lower densities. At their higher densities, the extra colors provide the high quality color. Thus, the curves of Fig. 7B tend to be close to curve 80 at the low densities and far from to it at the high densities.

Density adjuster 72 may, for example, perform the following computation in order to generate "CMYK" values from $L_i$ values:

$$\text{"CMYK"}_{ij} = u_i L_j + (D_i' - 100)[(L_j - t_i')/(100 - t_i')]^{w(i)}, \quad L_j > t_i'$$
$$= v_i L_j \quad\quad\quad\quad\quad\quad\quad\quad\quad\quad\quad\quad\quad L_j \le t_i'$$

where:

$i = 1, 2, 3$ or $i = 1, 2, 3, 4$;
$j = t_i', t_i'+1, ..., D_i' (D_i' >= t_i')$
$D_i'$ and $t_i'$ are predetermined percent color density values; and
$w(i)$, $u_i$ and $v_i$ are real numbers.

For example, the output of adjuster 72 may be CMY values ($i = 1, 2, 3$) and the following values may be used for the various parameters, for all i: $D_i'$ is 85 percent color density, $t_i'$ is 10 percent color density, $w(i)$ is 0.3, $u_i$, is 1.0 and $v_i$ is 1.0.

Ink density adjusters 70 and 72 generate LUTs 84 and 86 respectively. LUT 84 transforms $RGB_{ori}$ values to "RGB" values. LUT 86 transforms $RGB_{ori}$ values to "CMYK" values. Together, LUTs 84 and 86 provide a conversion from $RGB_{ori}$ to "RGBCMYK". LUTs 84 and 86 may be combined to a single LUT 88, the output of which is a concatenation of the outputs of LUTs 84 and 86.

LUTs 84 and 86 may, if desired, be updated or modified through the use of a color correction unit 90, such as the color correction unit marketed by Scitex Corporation together with Scitex's Smart Scanner. The color correction unit 90 modifies the "RGBCMYK" values as requested by a user. The user might request a global color change, in which case, the contents of many of the cells in the LUTs 84 and 86, or, if they have been combined, in LUT 88, are modified. Local color corrections, operative in a portion of the color space rather than in the entire color space, can also be effected.

Conventional color correction techniques are described in chapter 10 of the above referenced publication by Molla.

Units 46, 48, 70 and 72 may, for example be based on a suitable CPU or other processing unit such as a Whisper workstation equipped with HSP boards, commercially available from Scitex Corporation.

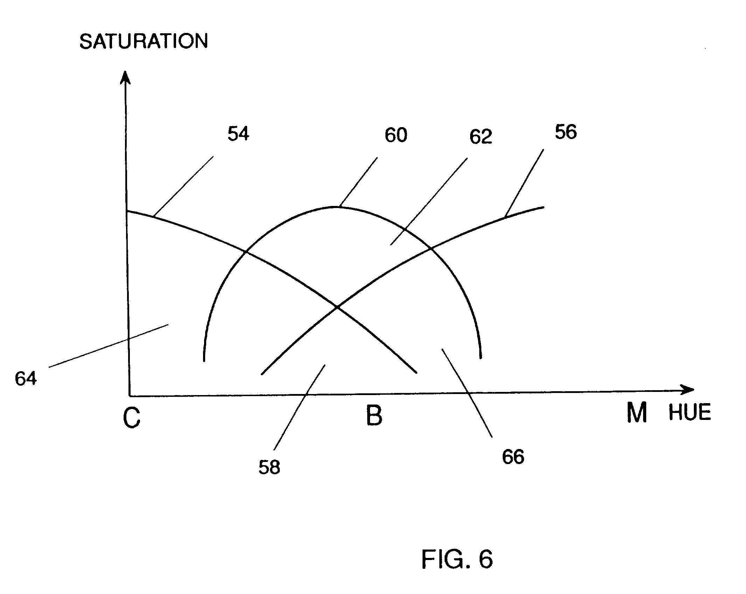

Fig. 6 is a saturation vs. hue graph which conceptually illustrates the areas of influence of two sample basic colors, cyan and magenta, and the extra color whose hue is between them, which is, in this case, blue. Fig. 6 illustrates curves 54 and 56, for cyan and magenta, respectively, which overlap in an area 58. In this area, both cyan and magenta are utilized to produce a color.

Given that the hues of the extra colors typically lie between the hues of the basic printing colors, generally, the hue of each extra color ("RGB") is traditionally represented by a combination of the basic colors ("CMYK"), as shown in the hue-saturation diagram of Fig. 6. However, the saturation of the extra colors is much larger.

In Fig. 6, the blue color is utilized for all colors falling within the area under the blue curve 60. Those within a section 62 are produced with blue color only, those within a section 64 with cyan and blue, those within a section 66 with magenta and blue, and those within area 58, with cyan, magenta and blue.

The extra color curve 60, which is a blue curve in the example of Fig. 6, is designed to smoothly generate more saturated colors as one varies the densities of the cyan, blue and magenta inks. Similar curves characterize other extra colors such as red and green. This smoothness constraint is implemented by ensuring that partial differentials of the above equations defining "RGB" and "CMYK", for the $E_i$'s and $L_i$'s in 'the area around $t_i$ or $t_i'$, exist.

It will be appreciated that the apparatus shown hereinabove is not restricted to applications in which there are three extra colors but is also useful for applications in which there are only one or two extra colors. In these applications, there are only one or two $E_i$ values and only one or two components from among the "R", "G" and "B" extra color components. The number of $L_i$ values and the number of basic color components remains unchanged, although the values themselves might change.

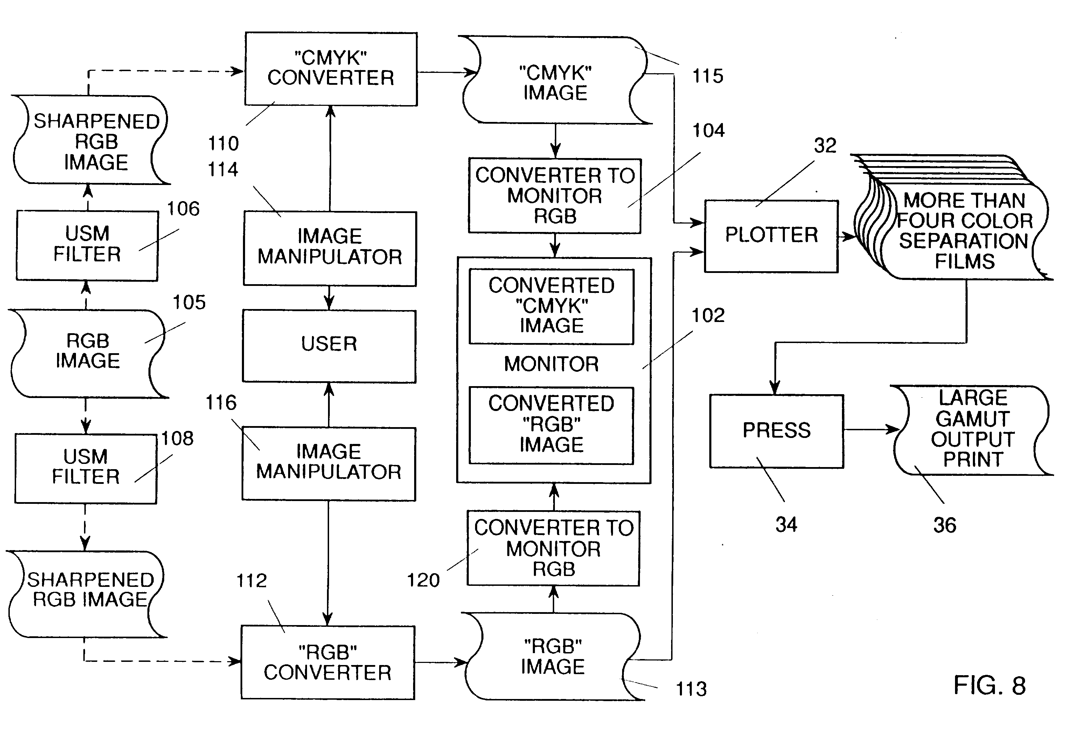

Reference is now made to Fig. 8 which is a modification of the apparatus of Fig. 3 in which the more-than-four-color converter 30 is replaced by a basic color converter 110 and an extra color converter 112. As described above, the more-than-four-color converter 30 of Fig. 3 typically converts an input image including a plurality of basic color components into an output image including the same plurality of basic color components, having different values, and also including a plurality of extra color components.

In Fig. 8, however, extra color converter 112 converts an input image 105 including a plurality of conventional color components into an output subimage, referenced as "RGB" image 113 in Fig. 8, which includes only a plurality of extra color components and not the original, conventional color components. Basic color converter 110 converts an input image including a plurality of conventional color components into an output subimage, referenced "CMYK" image 115 in Fig. 8, which includes the same plurality of basic color components, having values which take into account the role of the plurality of extra color components.

Basic and extra color converters 110 and 112 may respectively comprise LUTs 86 and 84 of Fig. 5, respectively.

Preferably, the processing route of Fig. 3, which includes unsharp masking, color conversion, image manipulation and monitor display is replaced, in the embodiment of Fig. 8, by two processing routes.

The embodiment of Fig. 8 is particularly suitable for applications in which a system is only capable of operating on digital representations of four or fewer values per pixel, because it allows the input representation 24 to be separately processed to produce basic color and extra color output representations. Preferably, there is only one system and the two processing routes occur sequentially; however, Fig. 8 presents the processing as occurring in a parallel manner, i.e. two unsharp maskers, color converters, image manipulators and converters to monitor-RGB are provided, as described in more detail below, one for each processing route.

As shown, unsharp masking unit 31 of Fig. 3 is preferably replaced by two unsharp mask filters 106 and 108 which are operative to sharpen the details of input representation 24 to different extents. Unsharp masker 108, corresponding to the "extra color component" processing route, typically provides greater sharpening than USM 106. Thus, the extra color will be utilized to sharpen the details of the output print. If the processing is sequential, USMs 106 and 108 are implemented as a single USM having two parameter sets.

Converters 110 and 112 are typically modified, in response to user commands, by respective image manipulators 114 and 116, which replace image manipulator 37 of Fig. 3.

Once the desired image manipulations have been performed, the input digital representation is reconverted, via the updated versions of converters 110 and 112 and in accordance with any image modifying parameters, and final output representations 113 and 115 are produced.

If the input digital representation is provided by a scanning device, the input medium is typically rescanned and the output (e.g. the input representation) of the scanning device is converted utilizing the updated converters 110 and 112.

The extra and basic color images 113 and 115 are preferably separately or sequentially displayed on a monitor 102, replacing monitor 38 of Fig. 3. Converter -to-monitor unit 39 of Fig. 3 is replaced by a conventional color image converter 118 which converts the basic color image 115 to monitor coordinates and by an extra color image converter 120 which converts the extra color image 113 to monitor coordinates.

The final output representations 113 and 115 are provided to the plotter 32, as described hereinabove with respect to Fig. 3, and the color separation films produced thereby are provided to the press 34, for producing the large gamut print 36.

In Figs. 3, 5 and 8, units of the systems respectively illustrated in these figures are represented by rectangular blocks whereas representations of the input image as successively processed are represented by curved blocks.

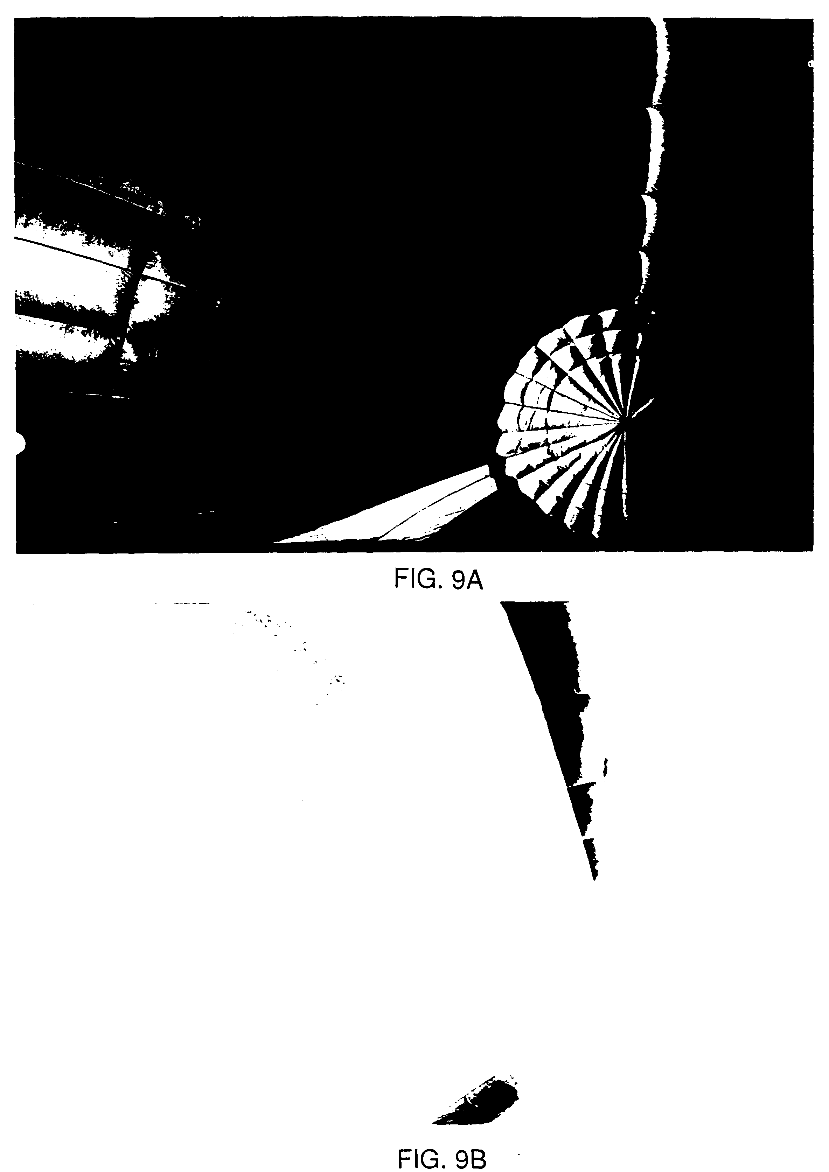

Fig. 9A is a color illustration of a four-color subimage, generated using the "basic color component" processing route of Fig. 8. Fig. 9B is a color illustration of a three-color subimage, generated using the "extra color component" processing route of Fig. 8. The two subimages of Figs. 9A and 9B together include substantially the same information as does the 7-color image of Fig. 4.

It can be seen that Fig. 9A is quite similar to Fig. 1, but that its colors are somewhat less saturated. Fig. 9B indicates the locations where the extra colors are to be placed, which correspond to the portions of Fig. 4 which are sharper than in Fig. 1.

It will be appreciated that the systems of Figs. 3 and 8 are operative for applications in which input media is scanned and the data converted to more than four color output representations, as well as applications in which already scanned input representations in a 3-component input color space are received.

It is appreciated that the invention shown and described herein may generate representations in more than 4 colors from representations in any color space. Sample sources for light-based color space representations are image creation and/or manipulation systems such as the Blaze, manufactured by Scitex Corporation or such as PHOTOSHOP, manufactured by Adobe Systems Inc. of Mountainview, Ca., U.S.A.

In order to print the created images, a three-component input space such as a light based color space is typically converted to an output color space based on inks, toners or other color output materials.

The term "printing" as used in the present specification is intended to refer to any process whereby a visually perceptible representation of an image is provided, such as processes employing proofers, presses, imagesetters, pressproofers, and second generation output devices.

It will be appreciated by persons skilled in the art that the present invention is not limited to what has been particularly shown and described hereinabove. Rather the scope of the present invention is defined only by the claims which follow:

## APPENDIX A

```
#include    <local.h>
#include    <dtstypdf.h>
#include    <debug.h>
#include    <glpar.h>
#include    <rfsif.h>
#include    <job.h>
#include    <liblist.h>
#include    <pspar.h>
#include    <ct.h>
#include    <uims.h>
#include    <nucleus.e>
#include    <cplm.h>
#include    <gksif.h>
#include    <wndif.h>
#include    <dts_inc.h>
#include    <dtsconst.h>
#include    <cbasic.h>
#include    <pickid.h>
#include    <wndif.h>
#include    <colcor.h>
#include    <math.h>
#include    <scn_type.h>

#define    SEP_SIZE        8192
#define    NUM_ENT         5120

extern short *buf_current;          /* 3d lut buffer */
extern short *buf_save;             /*      "        */
extern SCAN_PARAM s_p;              /*  dtstypdf.h */
extern PRESCAN_PARAM ps_p;          /*  dtstypdf.h */

 static  short end45 = TRUE ;
 double      cc[4],nc[4],nnc[4];
 char line[80];
 FILE *fp,*fpp,*fopen();
 short flag,col7,cmyk[4];
 double step1[4][4] = {{-.45,.55,.53,0.},
                       {.6,-.4,.6,0.},
                       {.45,.45,-.6,-.2},
                       {0.,0.,0.,1.0}};

 double step2[4][101];

 double step3[4][4] = {{1.0,0.,0.,.10},
                       {0.,1.0,0.,.15},
                       {0.,0.,1.0,.15},
                       {0.,0.,0.,1.0}};

 double step4[4][4] = {{.9,0.,0.,0.},
                       {0.,.9,0.,0.},
                       {0.,0.,.9,0.},
                       {0.,0.,0.,1.0}};

 double step5[4][101];

 double exp1,exp5,alf=2.0,bet=.5,stam;
 double mix_bal[4] = {1.0,1.0,1.0,1.0}; /* black is redundant! */
 double mix_bal_cmy[4] = {1.0,1.0,1.0,1.0}; /* black is redundant! */
 double blk_factor[3][4] = {{1.0,1.0,1.0,1.0},
                            {1.0,1.0,1.0,1.0},
                            {1.0,1.0,1.0,1.0}};
 double blk_factor1[4] = {1.0,1.0,1.0,1.0};
```

```
double start=30.,end=100.;
double gr_xyz[256];


init_7col()
{
 lut3d_save(buf_save);
}

callcmyk()
{
 short err;

 load3d(buf_save);
 lut3d(buf_current);
 callcmyk_in(buf_current);
 load3d(buf_current);
 dtsdisp(&s_p,&ps_p,NULL,1,&err);
 if(err != 0) handle_exc(err,0,0,NULL);
}

callcmyk_in(buf)
short *buf;
{
 short       sep_ptr[4] = { 0,  SEP_SIZE, 2*SEP_SIZE, 3*SEP_SIZE }  ;
 short i, j, s;

if(bet!=1.)
{

 for(i=0;i<3;i++)
 {
  for(j=0;j<101;j++)
   if(j<start+1)
    step5[i][j]= (double)j;
   else
    step5[i][j]=
           (double)j + (end -100.)*pow(((double)j-start)/(100.-
start),bet);
  }
  for(j=0;j<101;j++)
   step5[3][j]= (double)j;
 }

else
{
fflush(stdout);
if(alf==1.)
for(i=0;i<4;i++)
 for(j=0;j<101;j++)
  step5[i][j]= (double)j;
 }
 for (i=0;i<5120;i++)
 {
  for (s=0; s<4; s++)
  {
   cc[s]  = (double)buf[sep_ptr[s]];
   cc[s] = MAX(MIN((100.-cc[s]/2.55),100.),0.);
  }

  for (s=0; s<4; s++)
  {
```

```
    nc[s]=0.;
    nnc[s]=0.;
    }
   for (s=0; s<3; s++)
    for (j=0; j<4; j++)
     if(j==s)
       nnc[s] += step4[s][j]/mix_bal_cmy[j]*blk_factor1[j]*cc[j];
     else
       nnc[s] += step4[s][j]*blk_factor1[j]*cc[j];
    for (j=0; j<4; j++)
     nnc[3] += step4[3][j]*cc[j];

   for (s=0; s<4; s++)
    nc[s] = MIN(MAX(nnc[s],0.),100.);

   for (s=0; s<4; s++)
    nc[s] = step5[s][(short)nc[s]];


   for (s=0; s<4; s++)
    buf[sep_ptr[s]++] = (short)(2.55*(100.-nc[s]));
   } /* 5120 */
  }


callrgb()
{
 short err;

 load3d(buf_save);
 lut3d(buf_current);
 callrgb_in(buf_current);
 load3d(buf_current);
 dtsdisp(&s_p,&ps_p,NULL,1,&err);
 if(err != 0) handle_exc(err,0,0,NULL);
}


callrgb_in(buf)
short *buf;
{
 short       sep_ptr[4] = { 0,  SEP_SIZE, 2*SEP_SIZE, 3*SEP_SIZE }  ;
 short i, j, s;

 alf = 1.01;
 blk_factor[0][3] = 1.0;
 blk_factor[1][3] = 0.9;
 blk_factor[2][3] = 1.05;


 for(i=0;i<3;i++)
 {
  for(j=0;j<101;j++)
  if(j<start+1)
   step2[i][j]= 0.;
  else
   step2[i][j]= end*(double)pow(((double)j-start)/(100.-start),alf);

 }
 for(j=0;j<101;j++)
  step2[3][j]= (double)j;
```

13

```
    nc[s]=0.;
    nnc[s]=0.;
    }
  for (s=0; s<3; s++)
   for (j=0; j<4; j++)
    if(j==s)
     nnc[s] += step4[s][j]/mix_bal_cmy[j]*blk_factor1[j]*cc[j];
    else
     nnc[s] += step4[s][j]*blk_factor1[j]*cc[j];
   for (j=0; j<4; j++)
    nnc[3] += step4[3][j]*cc[j];

  for (s=0; s<4; s++)
   nc[s] = MIN(MAX(nnc[s],0.),100.);

  for (s=0; s<4; s++)
   nc[s] = step5[s][(short)nc[s]];


  for (s=0; s<4; s++)
   buf[sep_ptr[s]++] = (short)(2.55*(100.-nc[s]));
   } /* 5120 */
}


callrgb()
{
 short err;

 load3d(buf_save);
 lut3d(buf_current);
 callrgb_in(buf_current);
 load3d(buf_current);
 dtsdisp(&s_p,&ps_p,NULL,1,&err);
 if(err != 0) handle_exc(err,0,0,NULL);
}


callrgb_in(buf)
short *buf;
{
 short       sep_ptr[4] = { 0,  SEP_SIZE, 2*SEP_SIZE, 3*SEP_SIZE }  ;
 short i, j, s;

alf = 1.01;
blk_factor[0][3] = 1.0;
blk_factor[1][3] = 0.9;
blk_factor[2][3] = 1.05;


for(i=0;i<3;i++)
{
 for(j=0;j<101;j++)
 if(j<start+1)
  step2[i][j]= 0.;
 else
  step2[i][j]= end*(double)pow(((double)j-start)/(100.-start),alf);

}
for(j=0;j<101;j++)
 step2[3][j]= (double)j;
```

```
for (i=0;i<5120;i++)
{
 for (s=0; s<4; s++)
 {
  cc[s]  = (double)buf[sep_ptr[s]];
  cc[s] = MAX(MIN((100.-cc[s]/2.55),100.),0.);
 }

 for (s=0; s<4; s++)
 {
  nc[s]=0.;
  nnc[s]=0.;
 }
 for (s=0; s<4; s++)
  for (j=0; j<4; j++)
  {
   if(j==s)
    stam = step1[s][j]/mix_bal[j];
   else
    stam = step1[s][j];
   nc[s] += stam*cc[j];
  }

 for (s=0; s<4; s++)
  nc[s] = MIN(MAX(nc[s],0.),100.);

 for (s=0; s<4; s++)
  nc[s] = step2[s][(short)nc[s]];

 for (s=0; s<3; s++)
  for (j=0; j<4; j++)
   nnc[s] += step3[s][j]*blk_factor[s][j]*nc[j];
 nnc[3] = 0.;

 for (s=0; s<4; s++)
  buf[sep_ptr[s]++] = (short)(2.55*(100.-nnc[s]));
 }
}

original_7col()
{
short err;

read3d_save(buf_save);
load3d(buf_save);
dtsdisp(&s_p,&ps_p,NULL,0,&err);
if(err != 0) handle_exc(err,0,0,NULL);
return;

}
```

```
prev_7col()
{
short err;

load3d(buf_current);
dtsdisp(&s_p,&ps_p,NULL,0,&err);
if(err != 0) handle_exc(err,0,0,NULL);
return;

}
```

```
cmyk_update()
{
 callcmyk();
 write3d_save(buf_current);
 grad8_end_points(end45);
 return;
}

rgb_update()
{
 callrgb();
 write3d_save(buf_current);
 grad8_end_points(end45);
 return;
}

Seven_colors(val)      /* Called by IDF. */
short *val;                 /* Return :  0 - Close "7 Colors" option,
*/
{                          /*          1 - Open it.                 */
  char  line[80];
  short i, line_count;

  init_Cnblock();
  if(SMRT)
  {
    get_Cnblock_number(12);
    get_Cnline(line);
  }
  else
  {
    get_Cnblock_number(8);
    line_count = (GEFEN) ? 3 : 4 ;
    for(i = 0; i < line_count; i++)
      get_Cnline(line);
  }
  sscanf(line,"%d",&i);
  *val = i + 1;
}

cancel7col()
{
 short err;

 read3d_save(buf_save);
 load3d(buf_save);
 lut3d(buf_current);
 dtsdisp(&s_p,&ps_p,NULL,0,&err);
 if(err != 0) handle_exc(err,0,0,NULL);
 write3d_save(buf_current);
 return;
}
```

**Claims**

1. A method for producing a large gamut output print (36) of a color image from at least five different color separations (35) comprising:

   providing an input digital representation (24;105) of a color image in an input color space being a three color

17

space;

converting said input digital representation into an output digital representation (33;113,115) of the color image comprising an output digital representation (113) in said three colour space and an output digital representation (115) in a four colour space;

producing at least five different colour separations (35) to be used for printing said color image from said output digital representations, said at least five color separations comprising four colour separations produced from said output digital representation (115) in said four colour space substantially without modification and at least one additional color separation produced from said output digital representation (113) in said three color space; and

causing said at least one additional color separation to have a color density which depends on color densities of said four color separations.

2. A method according to claim 1 and including the step of unsharp masking said input digital representation (24; 105) before said step of converting.

3. A method according to claim 1 wherein said at least five color space comprises a five, six or seven color output space and wherein there are a corresponding number of different color separations (35).

4. A method according to claim 2 wherein said step of unsharp masking is performed twice, creating first and second separately sharpened input representations (29), and wherein said step of converting comprises the step of converting said first and second input representations to first and second output representations (113,115), defined in approximately complementary color spaces, wherein said first and second output representations together form said output digital representation (33) in said at least five color output space.

5. A method according to claim 4 and wherein said step of unsharp masking is performed with two different sets of parameters.

6. A method according to claim 5 and wherein said second input representation differs in sharpness, relative to said first input representation.

7. A method according to claim 1 and wherein said at least five color separations (35) comprises at least one of a redlike color separation, a greenlike color separation or a bluelike color separation.

8. A method according to claim 7 and wherein said at least five color separations (35) comprises at least one of an orange color separation, a green color separation and a violet color separation.

9. A method according to any of the previous claims and wherein said input digital representation (24;105) represents an input medium.

10. A method according to any of the previous claims and also comprising the step of displaying the output digital representation (33;113,115) on a monitor (38;102).

11. A method according to any of the previous claims and wherein said step of converting is performed by a lookup table (LUT) (50,52,84,86).

12. A method according to claim 11 and including the steps of prescanning an input medium to provide said input digital representation (24;105), modifying said LUT (50,52,84,86) in accordance with user input, rescanning said input medium to produce a new input digital representation and converting said new input digital representation with said modified LUT (88).

13. A method according to claim 1, wherein said step of converting comprises employing a first converter (110) for converting said input digital representation (105) into a first digital representation (115) in a first four color output space, and employing a second converter (112) for converting said same input digital representation (105) to an output digital representation (113) in a three color space.

14. A method according to any of the preceding claims, wherein said at least five color separations (35) are produced in four screen angles.

**15.** A method according to claim 14, wherein said four screen angles are in the following degrees: 112.5, -7.5, 97.5 and 52.5.

**16.** Apparatus for producing a large gamut output print (36) of a color image from at least five different color separations (35) comprising:

a memory storing an input digital representation (24;105) of a color image in a three color input space; and
a converter (30;110,112) for converting said-input digital representation into an output digital representation (33;113,115) of the color image in said three color space and an output image in a four color space;
a plotter (32) for producing at least five different color separations (35) to be used for printing said color image from said output digital representations;
said at least five color separations comprising four color separations produced from said output digital representation (113) in said four color space substantially without modification and at least one additional color separation produced from said output digital representation (115) in said three color space; and
said at least one additional color separation has a dot density which depends on color densities of said four color separations.

**17.** Apparatus according to claim 16 and including an unsharp mask filter (31;106,108), providing input to said converter (30;110,112), for sharpening said input digital representation (24;105).

**18.** Apparatus according to claim 16 or 17, wherein said at least five color space comprises a five, six or seven color output space and wherein there are a corresponding number of color separations (35).

**19.** Apparatus according to claim 17, wherein said unsharp mask filter (31;106,108) is operative to create first and second separately sharpened input representations and wherein said converter (30;110,112) comprises means for converting said first and second input representations to first and second output representations (113,115), defined in approximately complementary color spaces, wherein said first and second output representations together form said output digital representation in said at least five color output space.

**20.** Apparatus according to claim 19 and wherein said unsharp mask filter operates (31;106,108) with two different sets of parameters.

**21.** Apparatus according to claim 20, wherein said second input representation is more sharply masked than said first input representation.

**22.** Apparatus according to claim 16, wherein said at least five color separations (35) comprise at least one of a redlike color separation, a greenlike color separation and a bluelike color separation.

**23.** Apparatus according to claim 16, wherein said at least five color separations (35) comprise at least one of an orange color separation, a green color separation and a violet color separation.

**24.** Apparatus according to any of claims 16 to 23, wherein said input digital representation (24;105) represents an input medium.

**25.** Apparatus according to any of claims 16 to 24 and further comprising a monitor (38;102) and a conversion-to-monitor color space unit (39;104,120) for converting the output digital representation (33;113,115) for display on the monitor.

**26.** Apparatus according to any of claims 16 to 25, wherein said converter (30; 110,112) comprises a LookUp Table (50,52,84,86).

**27.** Apparatus according to claim 26, including a scanner for prescanning an input medium to provide said input digital representation (24;105) and an image and LUT manipulator (37;114,116) for modifying said LUT (50,52,84,86) in accordance with user input, wherein said scanner also is operative to rescan said input medium to produce a new input digital representation and said converter (30;110,112) is operative to convert said new input digital representation with said modified LUT (88).

**28.** Apparatus according to claim 16, wherein said converter (30) comprises a first converter (110,112) for converting an input digital representation (105) in an input colour space into a first digital representation (113) in a first four color output space, and a second converter for converting the same input digital representation in said input color space to an output digital representation (115) in a three color space.

29. Apparatus according to any one of claims 16 to 28, wherein said plotter is operative to print said five color separations (35) in four screen angles.

30. Apparatus according to claim 29, wherein said four screen angles are in the following degrees: 112.5, -7.5, 97.5 and 52.5.

**Patentansprüche**

1. Verfahren zum Herstellen eines einen großen Tonumfang aufweisenden Ausgabedruckes (36) eines Farbbildes aus mindestens fünf verschiedenen Farbseparationen (35), mit:

   eine digitale Eingabe-Darstellung (24; 105) eines Farbbildes wird in einem Eingabe-Farbraum, welcher ein Dreifarbenraum ist, zur Verfügung gestellt;

   die digitale Eingabe-Darstellung wird in eine digitale Ausgabe-Darstellung (33; 113, 115) des Farbbildes umgewandelt, eine digitale Ausgabe-Darstellung (1 13) in dem Dreifarbenraum und eine digitale Ausgabe-Darstellung (115) in einem Vierfarbenraum enthaltend;

   mindestens fünf verschiedene Farbseparationen (35), die zum Drucken des Farbbildes aus den digitalen Ausgabe-Darstellungen verwendet werden, werden hergestellt, wobei die mindestens fünf Farbseparationen vier Farbseparationen enthalten, die aus der digitalen Ausgabe-Darstellung (1 15) in dem Vierfarbenraum im wesentlichen ohne Modifikation hergestellt wurden, und mindestens eine zusätzliche Farbseparation enthalten, die aus der digitalen Ausgabe-Darstellung (113) in dem Dreifarbenraum hergestellt wurde; und

   die mindestens eine zusätzliche Farbseparation wird dazu gebracht, eine Farbdichte aufzuweisen, die von den Farbdichten der vier Farbseparationen abhängt.

2. Verfahren nach Anspruch 1,
   gekennzeichnet durch den Schritt des unscharfen Maskierens der digitalen Eingabe-Darstellung (24; 105) vor dem Schritt des Umwandelns.

3. Verfahren nach Anspruch 1.
   dadurch gekennzeichnet, daß der Farbraum mit mindestens fünf Farben einen Fünf-Sechs- oder Sieben-Farbenausgaberaum enthält, und daß eine entsprechende Anzahl von verschiedenen Farbseparationen (35) vorhanden ist.

4. Verfahren nach Anspruch 2,
   dadurch gekennzeichnet, daß der Schritt des unscharfen Maskierens zweimal ausgeführt wird, erste und zweite getrennt scharf gemachte Eingabe-Darstellungen (29) erzeugt werden, und wobei der Schritt des Umwandelns den Schritt des Umwandelns der ersten und zweiten Eingabe-Darstellungen in erste und zweite Ausgabe-Darstellungen (113, 115) enthält, definiert in annähernd komplementären Farbräumen, wobei die ersten und zweiten Ausgabe-Darstellungen zusammen die digitale Ausgabe-Darstellung (33) in dem mindestens fünf Farben aufweisenden Farbausgaberaum bildet.

5. Verfahren nach Anspruch 4,
   dadurch gekennzeichnet, daß der Schritt des unscharfen Maskierens mit zwei verschiedenen Parametersätzen ausgeführt wird.

6. Verfahren nach Anspruch 5,
   dadurch gekennzeichnet, daß die zweite Eingabe-Darstellung relativ zu der ersten Eingabe-Darstellung in der Schärfe differiert.

7. Verfahren nach Anspruch 1,

dadurch gekennzeichnet, daß die mindestens fünf Farbseparationen (35) mindestens eine rotähnliche Farbseparation, eine grünähnliche Farbseparation oder eine blauähnliche Farbseparation enthalten.

8. Verfahren nach Anspruch 7,
dadurch gekennzeichnet, daß die mindestens fünf Farbseparationen (35) mindestens eine orangefarbene Farbseparation, eine grüne Farbseparation oder eine violette Farbseparation enthalten.

9. Verfahren nach einem der vorstehenden Ansprüche,
dadurch gekennzeichnet, daß die digitale Eingabe-Darstellung (24; 105) ein Eingabemedium darstellt.

10. Verfahren nach einem der vorstehenden Ansprüche,
gekennzeichnet durch den Schritt des Darstellens der digitalen Ausgabe-Darstellung (33; 113, 115) auf einem Monitor (38; 102).

11. Verfahren nach einem der vorstehenden Ansprüche,
dadurch gekennzeichnet, daß der Schritt des Umwandelns durch eine Tabelle (LUT) (50, 52, 84, 86) ausgeführt wird.

12. Verfahren nach Anspruch 11,
dadurch gekennzeichnet, daß ein Eingabemedium vorgescannt wird, um die digitale Eingabe-Darstellung (24; 105) zur Verfügung zu stellen, daß die LUT (50, 52, 84, 86) in Übereinstimmung mit der Benutzereingabe modifiziert wird, daß das Eingabemedium erneut gescannt wird, um eine neue digitale Eingabe-Darstellung zu erzeugen, und daß die neue digitale Eingabe-Darstellung mit dem modifizierten LUT (88) umgewandelt wird.

13. Verfahren nach Anspruch 1,
dadurch gekennzeichnet, daß der Schritt des Umwandelns enthält, daß ein erster Converter (110) zum Umwandeln der digitalen Eingabe-Darstellung (105) in eine erste digitale Darstellung (115) in einem ersten Vierfarbenausgaberaum verwendet wird, und daß ein zweiter Converter (112) zum Umwandeln der gleichen digitalen Eingabe-Darstellung (105) in eine digitale Ausgabe-Darstellung (113) in einem Dreifarbenraum verwendet wird.

14. Verfahren nach einem der vorstehenden Ansprüche,
dadurch gekennzeichnet, daß die mindestens fünf Farbseparationen (35) in vier Rasterwinkeln hergestellt werden.

15. Verfahren nach Anspruch 14,
dadurch gekennzeichnet, daß die vier Rasterwinkel die folgenden Winkel enthalten: 112.5, -7.5, 97.5 und 52.5.

16. Vorrichtung zum Herstellen eines einen großen Tonumfang aufweisenden Ausgabedruckes (36) eines Farbbildes aus mindestens fünf verschiedenen Farbseparationen (35), welche enthält:

einen Speicher, welcher eine digitale Eingabe-Darstellung (24; 105) eines Farbbildes in einem Dreifarbeneingaberaum speichert; und

einen Converter (30; 110, 112) zum Umwandeln der digitalen Eingabe-Darstellung in eine digitale Ausgabe-Darstellung (33; 113, 115) des Farbbildes in dem Dreifarbenraum und eines Ausgabebildes in einem Vierfarbenraum;

einen Plotter (32) zum Herstellen von mindestens fünf verschiedenen Farbseparationen (35), die zum Drucken des Farbbildes aus den digitalen Ausgabe-Darstellungen verwendet werden;

wobei die mindestens fünf Farbseparationen vier Farbseparationen enthalten, die aus der digitalen Ausgabe-Darstellung (113) in dem Vierfarbenraum im wesentlichen ohne Modifikation hergestellt wurden, und mindestens eine zusätzliche Farbseparation enthalten, die aus der digitalen Ausgabe-Darstellung (115) in dem Dreifarbenraum hergestellt wurde; und

wobei die mindestens eine zusätzliche Farbseparation eine Punktdichte aufweist, die von Farbdichten der vier Farbseparationen abhängt.

17. Vorrichtung nach Anspruch 16,

gekennzeichnet durch einen Unschärfemaskenfilter (31; 106, 108), der eine Eingabe für den Converter (30; 110, 112) zur Verfügung stellt, zum Scharfmachen der digitalen Eingabe-Darstellung (24; 105).

18. Vorrichtung nach den Ansprüchen 16 oder 17,
dadurch gekennzeichnet, daß der mindestens fünf Farben aufweisende Raum einen Fünf-, Sechs- oder Sieben-Farbenausgaberaum enthält, und daß eine entsprechende Anzahl von Farbseparationen (35) vorhanden ist.

19. Vorrichtung nach Anspruch 17,
dadurch gekennzeichnet, daß der Unschärfemaskenfilter (31; 106, 108) arbeitet, um erste und zweite getrennt scharf gemachte Eingabe-Darstellungen zu erzeugen, und daß der Converter (30; 110, 112) Mittel zum Umwandeln der ersten und zweiten Eingabe-Darstellungen in erste und zweite Ausgabe-Darstellungen (113, 115) enthält, die in annährend komplementären Farbräumen definiert sind, und daß die ersten und zweiten Ausgabe-Darstellungen zusammen die digitale Ausgabe-Darstellung in dem mindestens fünf Farben aufweisenden Ausgaberaum bilden.

20. Vorrichtung nach Anspruch 19,
dadurch gekennzeichnet, daß der Unschärfemaskenfilter (31; 106, 108) mit zwei verschiedenen Parametersätzen arbeitet.

21. Vorrichtung nach Anspruch 20,
dadurch gekennzeichnet, daß die zweite Eingabe-Darstellung schärfer maskiert ist als die erste Eingabe-Darstellung.

22. Vorrichtung nach Anspruch 16,
dadurch gekennzeichnet, daß die mindestens fünf Farbseparationen (35) mindestens eine rotähnliche Farbseparation, eine grünähnliche Farbseparation oder eine blauähnliche Farbseparation enthalten.

23. Vorrichtung nach Anspruch 16,
dadurch gekennzeichnet, daß die mindestens fünf Farbseparationen (35) mindestens eine orangefarbene Farbseparation, eine grüne Farbseparation oder eine violette Farbseparation enthalten.

24. Vorrichtung nach einem der Ansprüche 16 bis 23,
dadurch gekennzeichnet, daß die digitale Eingabe-Darstellung (24; 105) ein Eingabemedium darstellt.

25. Vorrichtung nach einem der Ansprüche 16 bis 24,
gekennzeichnet durch einen Monitor (38; 102) und eine Wandele-in-Monitor-Farbraumeinheit (39; 104, 120) zum Umwandeln der digitalen Ausgabe-Darstellung (33; 113, 115) zur Darstellung auf dem Monitor.

26. Vorrichtung nach einem der Ansprüche 16 bis 25,
dadurch gekennzeichnet, daß der Converter (30; 110, 112) eine Tabelle (50, 52, 84, 86) enthält.

27. Vorrichtung nach Anspruch 26,
gekennzeichnet durch einen Scanner zum Vorscannen eines Eingabemediums, um die digitale Eingabe-Darstellung (24; 105) zur Verfügung zu stellen und durch einen Bild- und LUT-Manipulator (37; 114, 116) zum Modifizieren des LUT (50, 52, 84, 86) in Übereinstimmung mit der Benutzereingabe, wobei der Scanner ebenfalls arbeitet, um das Eingabemedium erneut zu scannen, um eine neue digitale Eingabe-Darstellung zu erzeugen und dadurch, daß der Converter (30; 110, 112) arbeitet, um die neue digitale Eingabe-Darstellung mit der modifizierten LUT (88) umzuwandeln.

28. Vorrichtung nach Anspruch 16,
dadurch gekennzeichnet, daß der Converter (30) einen ersten Converter (110, 112) zum Umwandeln einer digitale Eingabe-Darstellung (105) in einem Eingabefarbenraum in eine erste digitale Darstellung (113) in einem ersten Vierfarbenausgaberaum enthält, und einen zweiten Converter zum Umwandeln der gleichen digitalen Eingabe-Darstellung in dem Eingabefarbenraum in eine digitale Ausgabe-Darstellung (115) in einem Dreifarbenraum enthält.

29. Vorrichtung nach einem der Ansprüche 16 bis 28,
dadurch gekennzeichnet, daß der Plotter arbeitet, um die fünf Farbseparationen (35) in vier Rasterwinkeln zu drucken.

**30.** Vorrichtung nach Anspruch 29,
dadurch gekennzeichnet, daß die vier Rasterwinkel die folgenden Winkel enthalten: 112.5, -7.5, 97.5 und 52.5.

**Revendications**

1. Procédé de production d'une impression de sortie de grande plage (36) d'une image couleur à partir d'au moins cinq séparations de couleur différentes (35), comprenant:

   la constitution d'une représentation numérique d'entrée (24; 105) d'une image couleur dans un espace couleur d'entrée qui est un espace à trois couleurs;
   la conversion de ladite représentation numérique d'entrée selon une représentation numérique de sortie (33; 113, 115) de l'image couleur comprenant une représentation numérique de sortie (113) dans ledit espace à trois couleurs et une représentation numérique de sortie (115) dans un espace à quatre couleurs;
   la production d'au moins cinq séparations de couleur différentes (35) à utiliser pour imprimer ladite image couleur à partir desdites représentations numériques de sortie, lesdites au moins cinq séparations de couleur comprenant quatre séparations de couleur produites à partir de ladite représentation numérique de sortie (115) dans ledit espace à quatre couleurs sensiblement sans modification et au moins une séparation de couleur supplémentaire produite à partir de ladite représentation numérique de sortie (113) dans ledit espace à trois couleurs; et
   l'action consistant à faire en sorte que ladite au moins une séparation de couleur supplémentaire présente une densité de couleur qui dépend de densités de couleur desdites quatre séparations de couleur.

2. Procédé selon la revendication 1 et incluant l'étape de masquage non net de ladite représentation numérique d'entrée (24; 105) avant ladite étape de conversion.

3. Procédé selon la revendication 1, dans lequel ledit espace à au moins cinq couleurs comprend un espace de sortie à cinq, six ou sept couleurs et dans lequel il y a un nombre correspondant de séparations de couleur différentes (35).

4. Procédé selon la revendication 2, dans lequel ladite étape de masquage non net est réalisée deux fois en créant des première et seconde représentations d'entrée rendues nettes séparément (29) et dans lequel ladite étape de conversion comprend l'étape de conversion desdites première et seconde représentations d'entrée selon des première et seconde représentations de sortie (113, 115) définies dans des espaces de couleurs approximativement complémentaires, dans lequel lesdites première et seconde représentations de sortie forment ensemble ladite représentation numérique de sortie (33) dans ledit espace de sortie à au moins cinq couleurs.

5. Procédé selon la revendication 4 et dans lequel ladite étape de masquage non net est réalisée à l'aide de deux jeux différents de paramètres.

6. Procédé selon la revendication 5 et dans lequel ladite seconde représentation d'entrée diffère en netteté de ladite première représentation d'entrée.

7. Procédé selon la revendication 1 et dans lequel lesdites au moins cinq séparations de couleur (35) comprennent au moins une séparation de couleur prise parmi une séparation de couleur dans le rouge, une séparation de couleur dans le vert ou une séparation de couleur dans le bleu.

8. Procédé selon la revendication 7 et dans lequel lesdites au moins cinq séparations de couleur (35) comprennent au moins une séparation de couleur prise parmi une séparation de couleur orange, une séparation de couleur verte et une séparation de couleur violette.

9. Procédé selon l'une quelconque des revendications précédentes et dans lequel ladite représentation numérique d'entrée (24; 105) représente un support d'information d'entrée.

10. Procédé selon l'une quelconque des revendications précédentes et comprenant également l'étape d'affichage de la représentation numérique de sortie (33; 113, 115) sur un moniteur (38; 102).

11. Procédé selon l'une quelconque des revendications précédentes et dans lequel ladite étape de conversion est réalisée au moyen d'une table de consultation (LUT) (50, 52, 84, 86).

**12.** Procédé selon la revendication 11 et incluant les étapes de prébalayage d'un support d'information d'entrée afin de constituer ladite représentation numérique d'entrée (24; 105), de modification de ladite LUT (50, 52, 84, 86) conformément à une entrée utilisateur, de rebalayage dudit support d'information d'entrée afin de constituer une nouvelle représentation numérique d'entrée et de conversion de ladite nouvelle représentation numérique d'entrée à l'aide de ladite LUT modifiée (88).

**13.** Procédé selon la revendication 1, dans lequel ladite étape de conversion comprend l'utilisation d'un premier convertisseur (110) pour convertir ladite représentation numérique d'entrée (105) selon une première représentation numérique (115) dans un premier espace de sortie à quatre couleurs et l'utilisation d'un second convertisseur (112) pour convertir ladite même représentation numérique d'entrée (105) selon une représentation numérique de sortie (113) dans un espace à trois couleurs.

**14.** Procédé selon l'une quelconque des revendications précédentes, dans lequel lesdites au moins cinq séparations de couleur (35) sont produites selon quatre angles d'écran.

**15.** Procédé selon la revendication 14, dans lequel lesdits quatre angles d'écran présentent les valeurs en degrés qui suivent: 112,5, -7,5, 97,5 et 52,5.

**16.** Appareil pour produire une impression de sortie de grande plage (36) d'une image couleur à partir d'au moins cinq séparations de couleur différentes (35), comprenant:

une mémoire qui stocke une représentation numérique d'entrée (24; 105) d'une image couleur dans un espace d'entrée à trois couleurs; et
un convertisseur (30; 110, 112) pour convertir ladite représentation numérique d'entrée selon une représentation numérique de sortie (33; 113, 115) de l'image couleur dans ledit espace à trois couleurs et d'une image de sortie dans un espace à quatre couleurs;
un traceur (32) pour constituer au moins cinq séparations de couleur différentes (35) à utiliser pour imprimer ladite image couleur à partir desdites représentations numériques de sortie;
lesdites au moins cinq séparations de couleur comprenant quatre séparations de couleur produites à partir de ladite représentation numérique de sortie (113) dans ledit espace à quatre couleurs sensiblement sans modification et au moins une séparation de couleur supplémentaire produite à partir de ladite représentation numérique de sortie (115) dans ledit espace à trois couleurs; et
ladite au moins une séparation de couleur supplémentaire présente une densité de points qui dépend de densités de couleur desdites quatre séparations de couleur.

**17.** Appareil selon la revendication 16 et incluant un filtre de masque non net (31; 106, 108) qui applique une entrée sur ledit convertisseur (30; 110, 112) pour rendre nette ladite représentation numérique d'entrée (24; 105).

**18.** Appareil selon la revendication 16 ou 17, dans lequel ledit espace à au moins cinq couleurs comprend un espace de sortie à cinq, six ou sept couleurs et dans lequel il y a un nombre correspondant de séparations de couleur (35).

**19.** Appareil selon la revendication 17, dans lequel ledit filtre de masque non net (31; 106, 108) fonctionne pour créer des première et seconde représentations d'entrée rendues nettes séparément et dans lequel ledit convertisseur (30; 110, 112) comprend des moyens pour convertir lesdites première et seconde représentations d'entrée selon des première et seconde représentations de sortie (113, 115) définies dans des espaces de couleurs approximativement complémentaires, dans lequel lesdites première et seconde représentations de sortie forment ensemble ladite représentation numérique de sortie dans ledit espace de sortie à au moins cinq couleurs.

**20.** Appareil selon la revendication 19 et dans lequel ledit filtre de masque non net (31; 106, 108) fonctionne avec deux jeux différents de paramètres.

**21.** Appareil selon la revendication 20, dans lequel ladite seconde représentation d'entrée est masquée davantage nettement que ladite première représentation d'entrée.

**22.** Appareil selon la revendication 16, dans lequel lesdites au moins cinq séparations de couleur (35) comprennent au moins une séparation de couleur prise parmi une séparation de couleur dans le rouge, une séparation de couleur dans le vert et une séparation de couleur dans le bleu.

23. Appareil selon la revendication 16, dans lequel lesdites au moins cinq séparations de couleur (35) comprennent au moins une séparation de couleur prise parmi une séparation de couleur orange, une séparation de couleur verte et une séparation de couleur violette.

24. Appareil selon l'une quelconque des revendications 16 à 23, dans lequel ladite représentation numérique d'entrée (24; 105) représente un support d'information d'entrée.

25. Appareil selon l'une quelconque des revendications 16 à 24 et comprenant en outre un moniteur (38; 102) et une unité d'espace couleur de conversion pour moniteur (39; 104, 120) pour convertir la représentation numérique de sortie (33; 113, 115) pour affichage sur le moniteur.

26. Appareil selon l'une quelconque des revendications 16 à 25, dans lequel ledit convertisseur (30; 110, 112) comprend une table de consultation (LUT) (50, 52, 84, 86).

27. Appareil selon la revendication 26, incluant un dispositif de balayage pour prébalayer un support d'information d'entrée afin de produire ladite représentation numérique d'entrée (24; 105) et un manipulateur d'image et de LUT (37; 114, 116) pour modifier ladite LUT (50, 52, 84, 86) conformément à une entrée utilisateur, dans lequel ledit dispositif de balayage fonctionne également pour rebalayer ledit support d'information d'entrée afin de produire une nouvelle représentation numérique d'entrée et ledit convertisseur (30; 110, 112) fonctionne pour convertir ladite nouvelle représentation numérique d'entrée avec ladite LUT modifiée (88).

28. Appareil selon la revendication 16, dans lequel ledit convertisseur (30) comprend un premier convertisseur (110, 112) pour convertir une représentation numérique d'entrée (105) dans un espace couleur d'entrée selon une première représentation numérique (113) dans un premier espace de sortie à quatre couleurs et un second convertisseur pour convertir la même représentation numérique d'entrée dans ledit espace couleur d'entrée selon une représentation numérique de sortie (115) dans un espace à trois couleurs.

29. Appareil selon l'une quelconque des revendications 16 à 28, dans lequel ledit traceur fonctionne pour imprimer lesdites cinq séparations de couleur (35) selon quatre angles d'écran.

30. Appareil selon la revendication 29, dans lequel lesdits quatre angles d'écran présentent les valeurs en degrés qui suivent: 112,5, -7,5, 97,5 et 52,5.

FIG. 1

FIG. 4

FIG. 2

FIG. 3

EP 0 586 139 B1

EP 0 586 139 B1

LINEAR RGB$_{ori}$ → "RGB" TRANSFORMATION GENERATOR  46

RGB$_{ori}$ → E$_i$ LUT  50

NON LINEAR "RGB" DENSITY ADJUSTER  70

RGB$_{in}$ → "RGB" LUT  84

RGB → CMYK$_{ori}$ $_{cnv}$ LUT  40

GCR  42

GCR LUT  44

COLOR CORRECTION  90

LINEAR RGB$_{ori}$ → "CMYK" TRANSFORMATION GENERATOR  48

RGB$_{ori}$ → L$_i$ LUT  52

NON LINEAR "CMYK" DENSITY ADJUSTER  72

RGB$_{ori}$ → "CMYK" LUT  86

RGB$_{ori}$ → "CMYK" "RGB" LUT  88

FIG. 5

FIG. 6

SATURATION

54  60  62  56

64

C  B  M HUE

58  66

EP 0 586 139 B1

FIG.7A

EP 0 586 139 B1

FIG. 7B

EP 0 586 139 B1

FIG. 8

FIG. 9A

FIG. 9B